# EUROPÄISCHE PATENTSCHRIFT

(11) **EP 1 918 206 B1**
(45) Veröffentlichungstag und Bekanntmachung des Hinweises auf die Patenterteilung: **21.03.2012**
(21) Anmeldenummer: 07020847.5
(22) Anmeldetag: 24.10.2007
(51) Int. Cl.: B65B 9/20, B65B 9/06, B65B 25/06

(54) **Abfüllvorrichtung und Verfahren zum Abfüllen von viskosem Füllgut**
Filling device and method for filling viscose bulk material
Dispositif de remplissage et procédé de remplissage de produit de remplissage visqueux

(30) Priorität: 03.11.2006 DE 102006052023
(43) Veröffentlichungstag der Anmeldung: 07.05.2008
(73) Patentinhaber: Poly-clip System GmbH & Co. KG, 60489 Frankfurt am Main (DE)
(72) Erfinder: Hanten, Jürgen, 61231 Bad Nauheim (DE)
(74) Vertreter: Fritsche, Rainer

(56) Entgegenhaltungen:
- EP-A- 0 229 216
- EP-A- 0 273 507
- US-A- 4 724 657
- US-A- 5 241 800
- US-A- 6 029 428

## Beschreibung

Die Erfindung betrifft eine Abfüllvorrichtung zum Abfüllen von viskosem Füllgut, insbesondere Dichtstoffe, in ein schlauchförmiges Verpackungshüllenmaterial gemäß dem Oberbegriff des Anspruchs 1 sowie ein Verfahren hierzu gemäß dem Oberbegriff des Anspruchs 7.

Solche Vorrichtungen sind z.B. aus Dokument DE 26 50 040 A1 bekannt.

Insbesondere betrifft die Erfindung eine Abfüllvorrichtung zum Abfüllen von viskosem Füllgut, wie Dichtstoffe, insbesondere Silikon oder Wurstbrät, usw. in ein schlauchförmiges Verpackungs-hüllenmaterial, wobei die Vorrichtung wenigstens enthält: ein Absperrventil, ein Füllrohr, das in Füllfließrichtung des Füllguts hinter dem Absperrventil angeordnet ist, eine in Füllfließrichtung des Füllguts hinter dem Füllrohr angeordnete Clipsetz- und Clipschließeinrichtung sowie einen Vorrat an schlauchförmigem Verpackungshüllenmaterial, der zumindest teilweise auf dem Füllrohr angeordnet ist. Weiterhin betrifft die Erfindung ein Verfahren zum Abfüllen von viskosem Füllgut, wie Dichtstoffe, insbesondere Silikon oder Wurstbrät, usw. in ein schlauchförmiges Verpackungshüllenmaterial, wobei das Verfahren zumindest die folgenden Schritte enthält: Zuführen von unter Druck stehendem viskosem Füllgut zu einem Absperrventil, Abfüllen des Füllguts durch ein Füllrohr in einen schlauchförmigen Verpackungshüllenmaterialabschnitt und Abziehen eines weiteren schlauchförmigen Verpackungshüllenmaterialabschnitts vom Vorrat an schlauchförmigem Verpackungshüllenmaterial.

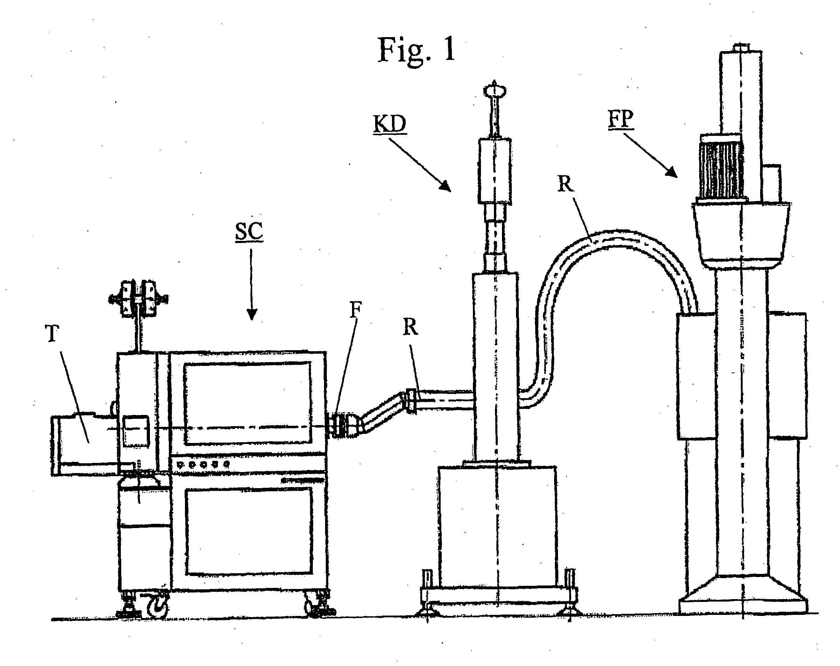

In der Praxis sind Abfüllanlagen bekannt, die viskoses Füllgut unter Druck in eine Dosiereinrichtung transportieren, um es dann portionsweise bzw. diskontinuierlich in einer eigentlichen Abfüllvorrichtung in entsprechende Verpackungen zu füllen. Eine solche bekannte Abfüllanlage, die in Fig. 1 dargestellt ist, besteht aus einer in der Darstellung der Fig. 1 rechts angeordneten Fasspresse FP und einem sich nach links in Füllfließrichtung des Füllguts anschließenden, der Fasspresse FP nachgeschalteten Kolbendosierer KD. Dieser weist einen im Wesentlichen vertikal ausgerichteten Dosierkolben auf sowie ein nicht näher gezeigtes Drei-Wege-Ventil. Der Eingang des Drei-Wege-Ventils ist durch das horizontal von rechts ankommende erste Verbindungsrohr R angedeutet, das die Fasspresse FP mit dem Kolbendosierer KD verbindet. Ein erster Ausgang des Drei-Wege-Ventils weist senkrecht nach oben in den Dosierkolben des Kolbendosierers KD und ein zweiter Ausgang des Drei-Wege-Ventils zeigt horizontal nach links.

Dem Kolbendosierer KD ist in Füllfließrichtung des Füllguts nach links eine bekannte Siegel-/Clipmaschine SC nachgeordnet, in der das Füllgut portionsweise abgepackt wird. Das Füllgut wird der Siegel-/Clipmaschine SC durch ein zweites Verbindungsrohr R zugeführt, das am oben genannten zweiten Ausgang des Drei-Wege-Ventils angeflanscht ist und zu dem in Füllfließrichtung des Füllguts vorderen Ende eines Füllrohrs F führt, das in die Siegel-/Clipmaschine SC reicht.

In dieser bekannten Anlage wird das in der Fasspresse befindliche Füllgut zunächst mit einem solchen Druck beaufschlagt, dass es durch das erste Verbindungsrohr R zum Kolbendosierer KD transportiert wird. Befindet sich das am Eingang zum Kolbendosierer KD angeordnete Drei-Wege-Ventil in der Position "Laden", wird das Füllgut durch den Eingang des Drei-Wege-Ventils zu dessen ersten senkrecht nach oben weisenden Ausgang transportiert und gelangt so in den Dosierkolben des Kolbendosierers KD. Anschließend wird das Drei-Wege-Ventil in die Position "Füllen" bewegt, wobei der Eingang des Drei-Wege-Ventils verschlossen wird, wogegen der erste Ausgang zum Eingang für das im Dosierkolben befindliche Füllgut und der zweite Ausgang des Drei-Wege-Ventils geöffnet wird. Jetzt presst der Kolbendosierer KD das im Dosierkolben befindliche Füllgut durch den ersten und den zweiten Ausgang des Drei-Wege-Ventils über das zweite Verbindungsrohr R sowie das Füllrohr F in die Siegel-/Clipmaschine SC, wo es in eine schlauchförmige Verpackungshülle gefüllt wird und durch Setzen und Verschließen von Clips portionsweise abgepackt wird. Eine Transportvorrichtung T trägt anschließend die abgepackten Produkte aus der Siegel-/Clipmaschine SC für die weitere Verarbeitung aus. Nachdem das Füllgut aus dem Kolbendosierer durch das zweite Verbindungsrohr R in die Siegel-/Clipmaschine SC transportiert wurde, wird das Drei-Wege-Ventil wieder in die Position "Laden" gebracht und der oben beschriebene Vorgang beginnt von vorn.

Die bisher verwendeten und am obigen Beispiel erläuterten Abfüllanlagen für ein viskoses Füllgut weisen einen komplizierten Aufbau auf, der gerade im Lebensmittelbereich einen erheblichen Aufwand an Wartung und Pflege verlangt. Insbesondere ist mit der bekannten Abfüllvorrichtung bedingt durch die Ladezeit des Kolbendosierers nur ein diskontinuierlicher Betrieb möglich, was zu einer langen Fertigungszeit für die herzustellende Füllprodukte führt.

Diese Nachteile sollen mit der vorliegenden Erfindung überwunden werden. Es ist insbesondere Aufgabe der Erfindung, eine Abfüllvorrichtung sowie ein Abfüllverfahren der eingangs genannten Art bereitzustellen, die einen kontinuierlichen Herstellvorgang für das Füllgutprodukt erlauben. Darüber hinaus ist es Aufgabe der Erfindung, eine solche Vorrichtung sowie ein solches Verfahren bereitzustellen, die bei einem vereinfachten Aufbau eine Verringerung des Wartungs- und Pflegeaufwands erlauben.

Die vorstehende Aufgabe wird hinsichtlich der Vorrichtung durch die Merkmale des Anspruchs 1 gelöst. In den sich daran anschließenden Ansprüchen 2 bis 6 finden sich vorteilhafte Ausgestaltungen hierzu.

Durch das Vorsehen mindestens eines Sensors, vorzugsweise eines kontinuierlich messenden Sensors zum direkten oder indirekten Erfassen der aus dem Vorrat an Verpackungshüllenmaterial abgezogenen Länge des Verpackungshüllenmaterials, dessen Ausgangssignal in der Lage ist, zumindest das Schließen des Absperrventils, durch das das unter Druck stehende Füllgut dem Füllrohr zuführbar ist, zu steuern, ist es in vorteilhafter Weise möglich, auf den Kolbendosierer sowie das Drei-Wege-Ventil der bekannten Abfüllvorrichtung zu verzichten, so dass damit ein zumindest annährend kontinuierlicher Herstellvorgang für das Füllgutprodukt ermöglicht wird. Des Weiteren ist der Aufbau der erfindungsgemäßen Abfüllvorrichtung im Vergleich zu der bekannten vereinfacht, so dass auch der Pflege- und Wartungsaufwand verringert ist. Weiterhin ist es durch die vorgeschlagene Erfindung möglich, das Volumen des Füllgutproduktes leicht einzustellen, da der Zeitpunkt der Ventilöffnung bzw. Ventilschließung oder die Zeitdauer der Ventilöffnung steuerbar bzw. regelbar ist.

In einer vorteilhaften Ausführung ist eine Steuereinrichtung vorgesehen, mittels der zumindest die Öffnungsdauer des Absperrventils einstellbar ist. Hierdurch kann mit der erfindungsgemäßen Abfüllvorrichtung bei bekanntem Durchmesser des Absperrventils und der Fließgeschwindigkeit des Füllguts die Abfüllmenge festgelegt werden.

Es ist weiterhin vorteilhaft, wenn die Steuereinrichtung zur Verarbeitung der Sensorsignale mit dem Sensor verbunden ist. Dabei ermöglicht die Steuereinrichtung die Verwendung verschiedener und je nach Messort geeigneter Sensoren durch entsprechende Anpassung der Steuereinrichtung an den jeweils verwendeten Sensor. Insbesondere kann der Sensor ein kontinuierlich messender Sensor sein. Der Sensor kann dabei beispielsweise durch einen Drehgeber gebildet werden.

Die Steuereinrichtung kann neben der bereits geschilderten Funktion der Einstellung der Öffnungsdauer des Absperrventils weitere Funktionen steuern bzw. regeln und hierzu weitere Signale empfangen und abgeben. So ist es beispielsweise weiterhin vorteilhaft, wenn die Steuereinrichtung oder die Clipsetz- und Clipschließeinrichtung, um den Abfüllvorgang zu beginnen, in der Lage ist, ein Abfüllvorgang-Startsignal auszugeben. Um eine optimale Koordination zwischen der Füllgutzufuhr durch das Absperrventil und dem Abschluss des Füllvorgangs zu erreichen, kann es dabei vorteilhaft sein, wenn die Steuereinrichtung mit der Clipsetz- und Clipschließeinrichtung verbunden ist.

Nach dem Abtrennen eines Füllprodukts vom übrigen Vorrat an Verpackungshüllenmaterial kann das Füllprodukt zur weiteren Verarbeitung über eine entsprechende Transportvorrichtung aus der Clipmaschine ausgetragen werden. Hierzu kann die Clipsetz- und Clipschließeinrichtung eine Trenneinheit zum Abtrennen eines Füllprodukts nach Abschluss des Füllvorgangs enthalten.

Ist die Steuereinrichtung in der Lage, ein Abfüllvorgang-Startsignal nach Erhalt eines Clipsetz- und Clipschließsignals oder eines Trennsignals aus der Clipsetz-und Clipschließeinrichtung auszugeben, kann eine weiter optimierte Koordination zwischen der Beendigung des Abfüllvorgangs und dem Start des nächsten Abfüllvorgangs erfolgen.

Grundsätzlich besteht die Möglichkeit, den Vorrat an Verpackungshüllenmaterial vorab herzustellen und auf das Füllrohr zumindest teilweise vor Beginn des Abfüllvorgangs aufzuziehen. Dann ist es vorteilhaft, wenn der Sensor zum Erfassen der aus dem Vorrat an Verpackungshüllenmaterial abgezogenen Länge des Verpackungshüllenmaterials in unmittelbarer Nähe zum Füllrohr angeordnet ist, da so eine besonders genaue und direkte Erfassung der aus diesem Vorrat abgezogenen Länge an Verpackungshüllenmaterial ermöglicht wird. Hierbei kann der Sensor zur Erfassung der aus dem Vorrat an schlauchförmigem Verpackungshüllenmaterial abgezogenen Länge unmittelbar an dem Vorrat des Verpackungshüllenmaterials angeordnet sein und beispielsweise durch einen mit einer Laufrolle versehenen Längenmesssensor gebildet sein.

Ebenso ist es möglich, dass das schlauchförmige Verpackungshüllenmaterial während des Abfüllvorgangs hergestellt wird. Hierbei ist es vorteilhaft, wenn die Abfüllvorrichtung einen Vorrat an Flachbahnmaterial für das Verpackungshüllenmaterial und eine Siegeleinrichtung enthält, die das vom Flachbahnmaterialvorrat abgezogene Flachbahnmaterial um das Füllrohr herum zu einem Schlauch formt und in Schlauchlängsrichtung versiegelt. Hierdurch kann durch einen entsprechend großen Vorrat an Flachbahnmaterial eine beliebige Menge an Füllprodukten ohne Unterbrechung hergestellt werden. In dieser Ausführung ist es ebenfalls nicht nötig, zum Auffüllen des Verpackungshüllenmaterialvorrats das Füllrohr zu entfernen.

In der unmittelbar vorstehend geschilderten Ausführungsform der Erfindung ist es vorteilhaft, wenn der Sensor zum Erfassen der vom Verpackungshüllenmaterialvorrat abgezogenen Länge des Verpackungshüllenmaterials an einer Umlenkwalze in der Siegeleinrichtung angeordnet ist und die Länge des vom Vorrat abgezogenen Flachbahnmaterials indirekt erfasst. Wenn der Sensor beispielsweise ein Drehgeber ist, kann über die Drehung der Umlenkwalze direkt die Länge des abgezogenen Flachbahnmaterials und damit indirekt die Länge des aus dem Vorrat an Verpackungshüllenmaterial abgezogenen Verpackungshüllenmaterials bestimmt werden. Zudem wird der Sensor beim Auffüllen des Vorrats an Flachbahnmaterial nicht beeinträchtigt.

Es ist weiterhin vorteilhaft, wenn das Verpackungshüllenmaterial mittels dem unter Druck stehenden Füllgut von dem auf dem Füllrohr angeordneten Vorrat an Verpackungshüllenmaterial abgezogen wird. Dadurch ist ein zusätzlicher Antrieb oder eine Abziehvorrichtung nicht notwendig. Ein solcher Antrieb oder eine solche Vorrichtung benötigt zusätzliche Maschinenteile sowie deren Steuerung.

Um diesen Druck aufzubauen, ist es weiterhin von Vorteil, wenn eine Druckeinrichtung mit dem Absperrventil verbunden ist. Dabei ist die Höhe des Drucks so gewählt, dass in der gesamten erfindungsgemäßen Abfüllvorrichtung keine weitere Transporteinrichtung für das Füllgut nötig ist.

Das Absperrventil kann je nach Ausführungsform auf verschiedene Weise betätigt werden. In einer bevorzugten Ausführung ist es durch einen Motor antreibbar. Ein solcher Motor ist besonders einfach durch ein entsprechendes Sensorsignal zu steuern. Eine weiter verbesserte Steuerung ist möglich, wenn der Motor des Absperrventils mit der Steuereinrichtung verbunden ist. Dadurch ist eine Anpassung des Sensorsignals an den verwendeten Motor möglich.

Hinsichtlich des Verfahrens wird die vorstehende Aufgabe durch die Merkmale des Anspruchs 7 gelöst. In den sich daran anschließenden Ansprüchen 8 bis 10 finden sich vorteilhafte Ausgestaltungen hierzu. Hinsichtlich der Vorteile, die mit dem erfindungsgemäßen Verfahren erzielt werden können, ist zu bemerken, dass diese die gleichen sind, wie sie im Zusammenhang mit der erfindungsgemäßen Vorrichtung vorstehend erläutert wurden.

Insbesondere ist es vorteilhaft, wenn eine Steuereinrichtung vorgesehen wird, die ein Abfüllvorgang-Startsignal ausgibt.

Alternativ oder ergänzend kann eine Steuereinrichtung oder die Clipsetz- und Clipschließeinrichtung vorgesehen sein, die die Signale der Clipsetz- und Clipschließeinrichtung verarbeitet, mit der sie verbunden ist.

Weiterhin kann alternativ oder ergänzend eine Steuereinrichtung vorgesehen sein, die die Signale einer einen Bestandteil der Clipsetz- und Clipschließeinrichtung bildenden Trenneinheit verarbeitet, mit der sie verbunden ist.

Es ist noch zu bemerken, dass die erfindungsgemäße Vorrichtung bzw. das erfindungsgemäße Verfahren für das Abfüllen der unterschiedlichsten fließfähigen bzw. viskosen Materialen eingesetzt werden kann. Neben Dichtstoffen kann es sich hierbei um Silikon, Polyurethan, Acrylat usw. aber auch Wurstbrät handeln.

Weitere vorteilhafte Ausgestaltungen sowie eine Ausführungsform der Erfindung werden nachstehend im Zusammenhang mit den beigefügten Zeichnungen erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen.

Es zeigen:
- Fig. 1: eine schematische Ansicht des prinzipiellen Aufbaus einer Abfüllanlage gemäß dem Stand der Technik;
- Fig. 2: eine schematische Seitenansicht des prinzipiellen Aufbaus einer Abfüllanlage für viskose Füllgüter, bei der die vorliegende Erfindung zum Einsatz kommt; und
- Fig. 3: eine Abfüllvorrichtung entsprechend der vorliegenden Erfindung.

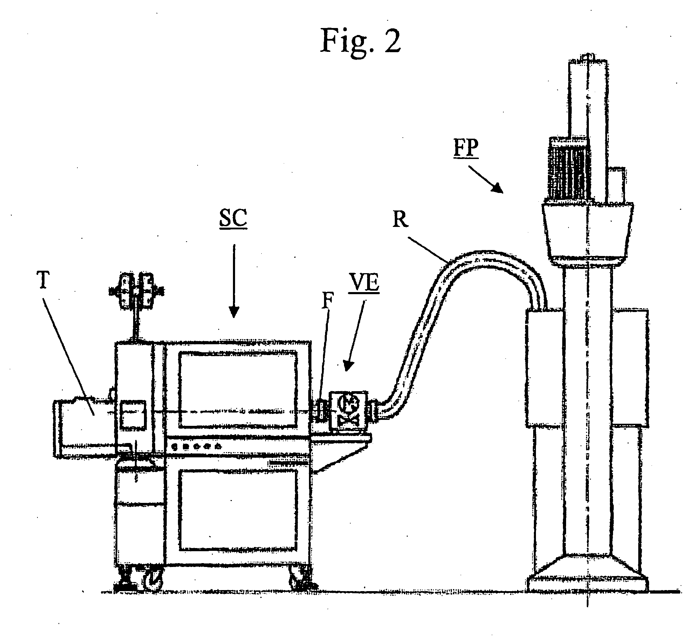

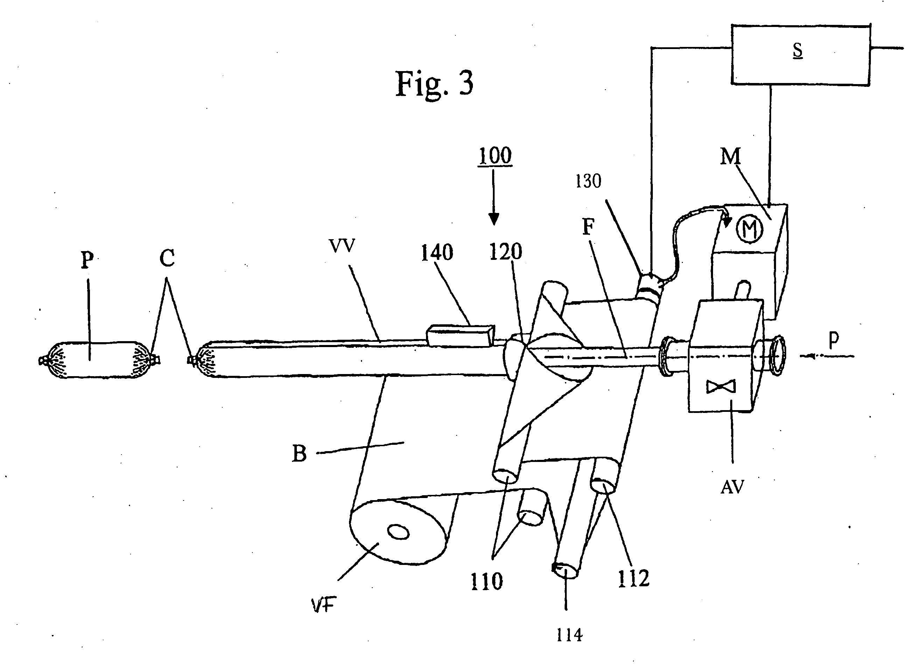

Ein Ausführungsbeispiel der erfindungsgemäßen Vorrichtung soll anhand der Figuren 2 und 3 näher erläutert werden.

Fig. 2 zeigt den prinzipiellen Aufbau einer Abfüllanlage für viskose Füllgüter, wie Dichtstoffe oder Wurstbrät, bei der die erfindungsgemäße Abfüllvorrichtung zum Einsatz kommt. Die Abfüllanlage setzt sich zusammen aus einer bekannten Fasspresse FP, die dazu dient, dass zu fördernde Gut mit einem Druck zu beaufschlagen. An die Fasspresse FP schließt sich in Füllfließrichtung des Füllguts, d.h. in der Darstellung der Fig. 2 nach links, eine Ventileinheit VE an. Die Verbindung zwischen der Fasspresse FP und der Ventileinheit VE wird durch einen Verbindungsschlauch oder ein Verbindungsrohr R gebildet, wobei letzteres üblicherweise aus einem nichtrostenden Edelstahl besteht.

Wie aus Fig. 3 hervorgeht, besteht die Ventileinheit VE aus einem Absperrventil AV und einem Motor M zum Betätigen des Absperrventils AV. Der Motor M ist über eine nicht näher bezeichnete Signalleitung mit einer Steuereinrichtung S verbunden und kann von dieser Steuersignale empfangen bzw. ggf. Signale an diese abgeben.

Das Absperrventil AV ist als Durchgangsventil ausgeführt, dessen Durchlassöffnung horizontal und von links nach rechts verläuft, wodurch auch dessen Durchlassrichtung gekennzeichnet ist. Ein solches Ventil besteht für den Einsatz im Lebensmittelbereich ebenfalls aus einem rostfreien Edelstahl.

Wie ebenfalls aus Fig. 3 zu entnehmen ist, schließt sich in Füllfließrichtung des Füllguts an das Absperrventil AV ein Füllrohr F an, das in eine sich daran in Füllfließrichtung anschließende Siegel-/Clipmaschine SC reicht. Das Füllrohr F ist horizontal und koaxial mit der oben erwähnten Durchlassöffnung des Absperrventils AV ausgerichtet und bildet so eine füllgutdichte Verlängerung der Durchlassöffnung des Absperrventils AV. An die Siegel-/Clipmaschine SC schließt sich in Füllfließrichtung des Füllguts eine Transporteinrichtung T an, die die Füllprodukte P aus der Siegel-/Clipmaschine SC transportiert (vgl. Fig. 2).

Auf dem Füllrohr F ist ein nicht näher bezeichneter Schlauchabschnitt aus einem Verpackungshüllenmaterial angeordnet, der einen Vorrat VV an diesem Verpackungshüllenmaterial bildet. Wie aus Fig. 3 ersichtlich ist, ist das linke Ende des Vorrats an Verpackungshüllenmaterial mit einem Verschlussclip C füllgutdicht verschlossen.

Die Siegel-/Clipmaschine SC enthält eine Siegeleinheit 100 sowie eine nicht dargestellte Clipsetz- und Clipschließeinrichtung, die einzeln oder beide ebenfalls mit der Steuereinrichtung S verbunden sein können, damit diese die besagten Einrichtungen steuern kann. Wie Fig. 3 zeigt, beinhaltet die Siegeleinrichtung 100 einen Vorrat VF an bekanntem, siegelfähigem Flachbahnmaterial B, der zu einer Rolle aufgerollt ist. Diese Rolle ist quer zur Füllfließrichtung des Füllguts unterhalb des Füllrohrs F in zumindest annährend horizontaler Ausrichtung angeordnet. Das Flachbahnmaterial B wird von der Rolle abgerollt und zur Glättung und zur Aufrechterhaltung der Bahnspannung über mehrere achsparallel zur Rolle verlaufende Umlenkwalzen 110, 112, 114, die ebenfalls unterhalb des Füllrohrs F angeordnet sind, geführt. Zur Vermeidung von Beschädigungen des Flachbahnmaterials B können die Umlenkwalzen 110, 112, 114 aus einem Kunststoff bestehen.

Am in der Darstellung hinteren Ende der Umlenkwalze 112 ist ein Sensor 130 angeordnet, dessen Signal zum Messen der aus dem Vorrat VF abgezogenen Länge an Flachbahnmaterial B verwendet wird. Das Signal des Sensors 130 wird über eine ebenfalls nicht näher bezeichnete Signalleitung an die Steuereinrichtung S weitergegeben, die dieses Signal in der nachstehend noch beschriebenen Weise verarbeiten bzw. nutzen kann.

Koaxial zum Füllrohr ist ein Formring 120 in etwa mittig auf diesem angeordnet. Er dient zum Bilden des schlauchförmigen Abschnitts an Verpackungshüllenmaterial, wie dies ebenfalls nachstehend noch näher erläutert wird.

Das Flachbahnmaterial B wird nach dem Abzug aus dem Vorrat VF und nach dem sich daran anschließenden Passieren der Umlenkwalzen 110, 112, 114 in Füllfließrichtung des Füllguts durch den Formring 120 hindurchgeführt, wobei es zu einem Schlauch um das Füllrohr F gebogen wird. Die Breite des Flachbahnmaterials B ist dabei so gewählt, dass sich die Längskanten des Flachbahnmaterials B um eine gewünschte Breite überlappen. Die Überlappung verläuft auf der Oberkante des Füllrohrs F. Vertikal über dem Füllrohr F und in Füllfließrichtung des Füllguts unmittelbar hinter dem Formring 120 ist die Siegelschiene 140 angeordnet. Sie befindet sich über der Überlappung des zum Schlauch gebogenen Flachbahnmaterials B, um die Überlappung durch eine Heißsiegelung oder Heißluftultraschall, Hochfrequenz, usw. füllgutdicht zu verschließen. Am linken, von dem Absperrventil AV wegweisenden Ende des Füllrohrs F ist zum Setzen und Verschließen der Verschlussclips C die nicht weiter dargestellte Clipsetz- und Clipschließeinrichtung angeordnet.

Das Abfüllen von viskosem Füllgut in das schlauchförmige Verpackungshüllenmaterial unter Verwendung der erfindungsgemäßen Vorrichtung geschieht wie folgt:
In der Fasspresse FP befindet sich das zu verpackende Füllgut, beispielsweise Wurstbrät oder Dichtmasse. Die Fasspresse FP bringt einen solchen Druck auf das Füllgut auf, dass es durch das Verbindungsrohr R zum zunächst verschlossenen Absperrventil AV transportiert wird. Erhält der Motor M des Absperrventils AV von der Steuereinrichtung S ein Abfüllvorgang-Startsignal, so öffnet er das Absperrventil AV und das Füllgut fließt durch das Absperrventil AV in das Füllrohr F. Auf dem Füllrohr F befindet sich an dessen vorderem Ende der den Vorrat VV an schlauchförmigem Verpackungshüllenmaterial bildende Schlauchabschnitt, der durch den Clip C in Füllfließrichtung des Füllguts unmittelbar hinter dem Ende des Füllrohrs F verschlossen ist und so einen Anfangszipfel für ein neu zu füllendes Füllprodukt P bildet.

Der von der Fasspresse FP auf das Füllgut aufgebrachte Druck ist so hoch, dass das Füllgut über das Ende des Füllrohrs F hinaus in das schlauchförmige Verpackungshüllenmaterial fließt und dabei weiteres Verpackungshüllenmaterial vom Füllrohr F nachzieht. Zeitgleich während des Nachziehens von Verpackungshüllenmaterial wird ebenfalls Flachbahnmaterial B vom Vorrat VF abgezogen, über die Umlenkwalzen 110, 112, 114 geglättet sowie unter Spannung gehalten und zum Formring 120 geführt. Dort wird das Flachbahnmaterial B so zu einem Schlauch um das Füllrohr F herum gebogen, dass sich die Längskanten überlappen. Dabei legt die Größe des Formrings 120 den Durchmesser des schlauchförmigen Verpackungshüllenmaterials fest.

Weiterhin zeitgleich mit dem Nachziehen des Verpackungshüllenmaterials versiegelt die auf die Überlappung abgesenkte Siegelschiene 140 die noch unverschlossen übereinanderliegenden Längskanten des Flachbahnmaterials B. Dadurch entsteht in Füllfließrichtung des Füllguts hinter der Siegelschiene 140 der Abschnitt an schlauchförmigem Verpackungshüllenmaterial.

Der auf der Umlenkwalze 112 befindliche Sensor 130 erfasst die Länge des nachgezogenen Flachbahnmaterials B und gibt ein entsprechendes Signal an die Steuereinrichtung S ab. Die vom Vorrat VF an Flachbahnmaterial B abgerollte Länge an Flachbahnmaterial B entspricht durch die Anordnung der erfindungsgemäßen Abfüllvorrichtung der Länge des schlauchförmigen Verpackungshüllenmaterials. Dadurch ist bei bekanntem Durchmesser auch sein Füllvolumen bekannt.

Nachdem eine vorbestimmte Länge an Flachbahnmaterial B vom Vorrat VF abgezogen wurde, gibt der Sensor 130 ein Signal direkt an den Motor M des Absperrventils AV oder an die Steuereinrichtung S ab, die ein entsprechendes Signal an den Motor M abgibt, der daraufhin das Absperrventil AV schließt. Dadurch wird die weitere Zufuhr an Füllgut gestoppt und es befindet sich die gewünschte Menge an Füllgut in dem schlauchförmigen Abschnitt des Verpackungshüllenmaterials. Jetzt greifen vorbekannte, nicht dargestellte Verdrängerscheren zwischen das Ende des Füllrohrs F und den eben gefüllten Abschnitt an Verpackungshüllenmaterial und bilden in ebenfalls vorbekannter Weise einen füllgutfreien Zopf. Auf diesen setzt und verschließt eine Clipsetz- und Clipschließeinheit ggf. durch ein entsprechendes Signal der Steuereinrichtung S einen Clip C zum Verschließen des eben gefüllten Abschnitts an Verpackungs-hüllenmaterial. Dabei entsteht ein fertiges Füllprodukt P.

Weiterhin setzt die Clipsetz- und Clipschließeinheit einen zweiten Clip C zur Schaffung eines Anfangszipfels für das nächste Füllprodukt P. Eine nicht dargestellte Trenneinheit trennt das Füllprodukt P vom übrigen Verpackungshüllenmaterial zwischen dem Verschlussclip C des fertigen Füllprodukts P und dem Clip C der den Anfangszipfel für das nächste Füllprodukt bildet, wobei dieser Vorgang ebenfalls durch die Steuereinrichtung S gesteuert werden kann

Nach dem Abtrennen des Füllprodukts P gibt die Trenneinheit und/oder die Clipsetz- und Clipschließeinheit ein Trennsignal an die Steuereinrichtung S ab, womit der Abschluss des Füllvorgangs gekennzeichnet wird. Nach Erhalt des Trennsignals gibt die Steuereinrichtung S ein Abfüllvorgang-Startsignal an den Motor M des Absperrventils AV ab. Bei Empfang dieses Signals öffnet der Motor M das Absperrventil AV und der nächste Abfüllvorgang beginnt.

Abschließend ist noch zu bemerken, dass die Erfindung nicht auf die in den Fig. 2 und 3 dargestellte Ausführungsform begrenzt ist. So kann ein Vorrat VV an schlauchförmigem Verpackungshüllenmaterial bereits auf dem Füllrohr F gespeichert sein, der Sensor 130 erfasst dann die Länge des vom Füllrohr F abgezogenen schlauchförmigen Verpackungshüllenmaterials. Es ist auch denkbar, eine andere als die vorgeschlagene Siegeleinrichtung 100 zu verwenden. Schließlich kann das Absperrventil AV auch durch ein Magnetventil gebildet werden, das dann direkt von einer Steuereinheit betätigt werden kann.

Des Weiteren ist zu bemerken, dass die Erfindung sowohl so ausgeführt sein kann, dass die einzelnen Einrichtungen, das Absperrventil bzw. dessen Motor und der Sensor direkt miteinander verbunden sind und sich gegenseitig mit Steuersignalen beaufschlagen, als auch dies über die Steuereinrichtung S erfolgen kann. Schließlich kann die erfindungsgemäße Abfüllvorrichtung sowohl in horizontaler Ausrichtung, wie vorstehend geschildert, oder auch in vertikaler Ausrichtung angeordnet werden.

Bezugszeichenliste
- AV: Absperrventil
- B: Flachbahnmaterial
- C: Clip
- F: Füllrohr
- FP: Fasspresse
- KD: Kolbendosierer
- M: Motor
- P: Füllprodukt
- R: Verbindungsrohr
- S: Steuereinrichtung
- SC: Siegel-/Clipmaschine
- T: Transportvorrichtung
- VE: Ventileinheit
- VF: Vorrat an Flachbahnmaterial
- VV: Vorrat an Verpackungshüllenmaterial
- 100: Siegeleinrichtung
- 110: Umlenkwalzen
- 112: Umlenkwalze
- 114: Umlenkwalze
- 120: Formring
- 130: Sensor
- 140: Siegelschiene

## Patentansprüche

1. Abfüllvorrichtung zum Abfüllen von viskosem Füllgut, insbesondere Dichtstoffe, in ein schlauchförmiges Verpackungshüllenmaterial enthaltend:
ein Absperrventil (AV), ein Füllrohr (F); das in Füllfließrichtung des Füllguts hinter dem Absperrventil (AV) angeordnet ist, eine in Füllfließrichtung des Füllguts hinter dem Füllrohr (F) angeordnete Clipsetz- und Clipschließeinrichtung sowie einen Vorrat (VV) an schlauchförmigem Verpackungshüllenmaterial, der zumindest teilweise auf dem Füllrohr (F) angeordnet ist,
**dadurch gekennzeichnet, dass** mindestens ein kontinuierlich messender Sensor (130) zum direkten oder indirekten Erfassen der aus dem Vorrat (VV) an Verpackungshüllenmaterial abgezogenen Länge des Verpackungshüllenmaterials vorgesehen ist, dessen Ausgangssignal in der Lage ist, zumindest das Schließen des Absperrventils (AV), durch das das unter Druck stehende Füllgut dem Füllrohr (F) zuführbar ist, zu steuern.

2. Abfüllvorrichtung nach Anspruch 1,
**dadurch gekennzeichnet, dass** eine Steuereinrichtung (S) vorgesehen ist, mittels der zumindest die Öffnungsdauer des Absperrventils (AV) einstellbar ist.

3. Abfüllvorrichtung nach Anspruch 2,
**dadurch gekennzeichnet, dass** die Steuereinrichtung (S) oder die Clipsetz- und Clipschließeinrichtung in der Lage ist, ein Abfüllvorgang-Startsignal auszugeben.

4. Abfüllvorrichtung nach einem der Ansprüche 1 bis 3,
**dadurch gekennzeichnet, dass** eine Steuereinrichtung (S) vorgesehen ist, die in der Lage ist, ein Abfüllvorgang-Startsignal nach Erhalt eines Clipsetz- und Clipschließsignals und/oder eines Trennsignals aus der Clipsetz- und Clipschließeinrichtung auszugeben.

5. Abfüllvorrichtung nach einem der Ansprüche 1 bis 4,
**dadurch gekennzeichnet, dass** ein Vorrat (VF) an Flachbahnmaterial (B) für das Verpackungshüllenmaterial und eine Siegeleinrichtung (100) vorgesehen ist, die das vom Flachbahnmaterialvorrat (VF) abgezogene Flachbahnmaterial (B) um das Füllrohr (F) herum zu einem Schlauch biegt und in Schlauchlängsrichtung versiegelt.

6. Abfüllvorrichtung nach einem der Ansprüche 1 bis 5,
**dadurch gekennzeichnet, dass** das Absperrventil (AV) durch einen Motor (M) antreibbar ist.

7. Verfahren zum Abfüllen von viskosem Füllgut, insbesondere Dichtstoffe, ' in ein schlauchförmiges Verpackungshüllenmaterial enthaltend die Schritte:
Zuführen von unter Druck stehendem, viskosem Füllgut zu einem Absperrventil (AV),
Abfüllen des Füllguts durch ein Füllrohr (F) in einen schlauchförmigen Verpackungshüllenmaterialabschnitt, und
Abziehen eines weiteren schlauchförmigen Verpackungshüllenmaterialabschnitts von einem Vorrat (VV) an schlauchförmigem Verpackungshüllenmaterial,
**dadurch gekennzeichnet, dass** mindestens ein kontinuierlich messender Sensor (130) zum direkten oder indirekten Erfassen der aus dem Vorrat (VV) an Verpackungshüllenmaterial abgezogenen Länge des Verpackungshüllenmaterials vorgesehen wird, dessen Ausgangssignal zumindest das Schließen des Absperrventils (AV), durch das das unter Druck stehende Füllgut dem Füllrohr (F) zugeführt wird, steuert.

8. Verfahren nach Anspruch 7,
**dadurch gekennzeichnet, dass** eine Steuereinrichtung (S) vorgesehen wird, mittels der die Öffnungsdauer des Absperrventils (AV) eingestellt wird.

9. Verfahren nach Anspruch 7 oder 8,
**dadurch gekennzeichnet, dass** eine Steuereinrichtung (S) vorgesehen wird, die die Sensorsignale des Sensors (130) verarbeitet, mit dem sie verbunden ist.

10. Verfahren nach einem der Ansprüche 7 bis 9,
**dadurch gekennzeichnet, dass** eine Steuereinrichtung (S) vorgesehen wird, die ein Abfüllvorgang-Startsignal nach erhalt eines Clipsetz- und Clipschließsignals oder eines Trennsignals aus der Clipsetz- und Clipschließeinrichtung ausgibt.

## Claims

1. Filling apparatus for filling viscous filling material, in particular sealing compounds, into a tubular casing material, comprising:
a closing valve (AV), a filling tube (F) arranged in filling flow direction of the filling material behind the closing valve (AV), a clip setting and clip closing device arranged in filling flow direction of the filling material behind the filling tube (F), and a supply (VV) of tubular casing material at least partially arranged on the filling tube (F),
**characterized in that**
at least one continuously measuring sensor (130) is provided for direct or indirect detection of a length of the casing material drawn from the supply (VV) of casing material, the output signal of which is able to control at least the closing operation of the closing valve (AV) through which the pressurized filling material can be supplied to the filling tube (F).

2. Filling apparatus according to claim 1,
**characterized in that** a control device (S) is provided which at least is used to set the opening period of the closing valve (AV).

3. Filling apparatus according to claim 2,
**characterized in that** the control device (S) or the clip setting and clip closing device is able to output a filling operation start signal.

4. Filling apparatus according to one of the claims 1 to 3,
**characterized in that** a control device (S) is provided which is able to output a filling operation start signal upon reception of a clip setting and clip closing signal and/or a separation signal from the clip setting and clip closing device.

5. Filling apparatus according to one of the claims 1 to 4,
**characterized in that** a supply (VF) of a flat web material (B) for the casing material and a sealing device (100) are provided, flexing the flat web (B) drawn from the flat web material supply (VF) around the filling tube (F) to a hose and sealing it in longitudinal direction of the hose.

6. Filling apparatus according to one of the claims 1 to 5,
**characterized in that** the closing valve (AV) being drivable by a motor (M).

7. Method for filling a viscous filling material, in particular sealing compounds, into a tubular casing material, comprising the steps of:
supplying pressurized viscous filling material to a closing valve (AV),
filling the filling material through a filling tube (F) into a portion of the tubular casing material, and
drawing a further portion of the tubular casing material from a supply (VV) of tubular casing material,
**characterized in that** at least one continuously measuring sensor (34) is provided for direct or indirect detection of a length of casing material drawn from the supply (AV) of casing material, an output signal of which controls at least the closing operation of the closing valve (AV) through which the pressurized filling material is supplied to the filling tube (F).

8. Method according to claim 7,
**characterized in that** a control device (S) is provided which is used to set the opening period of the closing valve (AV).

9. Method according to claim 7 or 8,
**characterized in that** a control device (S) is provided processing the sensor signals of the sensor (130) connected to it.

10. Method according to one of the claims 7 to 9,
**characterized in that** a control device (S) is provided outputting a filling operation start signal upon reception of a clip setting and clip closing signal or a separation signal from the clip setting and clip closing device.

## Revendications

1. Dispositif d'embossage pour embosser du produit visqueux, notamment des substances épaisses, dans une matière de gainage d'emballage en forme de boyau, comportant :
un robinet (AV) d'arrêt, un tube (F) d'embossage, qui est monté, dans le sens d'écoulement du produit à embosser, en aval du robinet (AV) d'arrêt, un dispositif de mise et de fermeture d'agra-fes, monté dans le sens d'écoulement du produit à embosser en aval du tube (F) d'embossage, ainsi qu'une réserve (VV) de matière de gainage d'emballage en forme de boyau, qui est disposée au moins en partie sur le tube (F) d'embossage,
**caractérisé en ce qu'**il est prévu au moins un capteur (130) mesurant en continu, qui détecte directement ou indirectement la longueur de la matière de gainage d'emballage retirée de la réserve (VV) de matière de gainage d'emballage et dont le signal de sortie est en mesure de commander au moins la fermeture du robinet (AV) d'arrêt, par lequel le produit à embosser sous pression est amené au tube (F) d'embossage.

2. Dispositif d'embossage suivant la revendication,
**caractérisé en ce qu'**il est prévu un dispositif (S) de commande, au moyen duquel au moins la durée d'ouverture du robinet (AV) d'arrêt est réglable.

3. Dispositif d'embossage suivant la revendication 2,
**caractérisé en ce que** le dispositif (S) de commande ou le dispositif de mise et de fermeture d'agrafes est en mesure d'émettre un signal de début de l'opération d'embossage.

4. Dispositif d'embossage suivant l'une des revendications 1 à 3,
**caractérisé en ce qu'**il est prévu un dispositif (S) de commande, qui est en mesure d'émettre un signal de début de l'opération d'embossage, après avoir reçu un signal de mise et de fermeture d'agrafes et/ou un signal de séparation du dispositif de mise et de fermeture d'agrafes.

5. Dispositif d'embossage suivant l'une des revendications 1 à 4,
**caractérisé en ce qu'**il est prévu une réserve (VF) de matière (B) en bande plate pour la matière de gainage d'emballage et un dispositif (100) de scellement, qui recourbe la matière (B) en bande plate retirée de la réserve (VF) de bande plate autour du tube (F) d'embossage en un boyau et qui la scelle dans la direction longitudinale du boyau.

6. Dispositif d'embossage suivant l'une des revendications 1 à 5,
**caractérisé en ce que** le robinet (AV) d'arrêt peut être entraîné par un moteur (M).

7. Procédé pour embosser du produit à embosser visqueux, notamment des substances épaisses, dans une matière de gainage d'emballage en forme de boyau, comprenant les stades dans lesquels :
on envoie du produit à embosser visqueux sous pression à un robinet (AV) d'arrêt,
on embosse du produit à embosser, par un tube (F) d'embossage, dans une partie de matière de gainage d'emballage en forme de boyau, et
on retire une autre partie de matière de gainage d'emballage en forme de boyau d'une réserve (BV) de matière de gainage d'emballage en forme de boyau,
**caractérisé en ce que** l'on prévoit au moins un capteur (130), de mesure en continu, qui détecte directement ou indirectement la longueur de la matière de gainage d'emballage retirée de la réserve (VV) de matière de gainage d'emballage et dont le signal de sortie commande au moins la fermeture du robinet (AV) d'arrêt, par lequel le produit à embosser sous pression est envoyé au tube (F) d'embossage.

8. Procédé suivant la revendication 7,
**caractérisé en ce qu'**on prévoit un dispositif (S) de commande, au moyen duquel la durée d'ouverture du robinet (AV) d'arrêt est réglée.

9. Procédé suivant la revendication 7 ou 8,
**caractérisé en ce que** l'on prévoit un dispositif (S) de commande, qui traite les signaux du capteur (130), avec lequel il est relié.

10. Procédé suivant l'une des revendications 7 à 9,
**caractérisé en ce que** l'on prévoit un dispositif (S) de commande, qui émet un signal de début d'opération d'embossage, après avoir reçu un signal de mise et de fermeture d'agrafes ou un signal de séparation du dispositif de mise et de fermeture d'agrafes.
